# FASCICULE DE BREVET EUROPEEN

(11) **EP 2 897 450 B1**
(45) Date de publication et mention de la délivrance du brevet: **16.11.2016**
(21) Numéro de dépôt: 13780179.1
(22) Date de dépôt: 23.09.2013
(51) Int. Cl.: A01B 59/06

(54) **PROCÉDÉ ET DISPOSITIF D'ATTELAGE D'UN OUTIL AGRICOLE SUR UN SYSTÈME DE RELEVAGE TROIS POINTS D'UN TRACTEUR AGRICOLE**
VERFAHREN UND KUPPLUNGSVORRICHTUNG EINER LANDMASCHINE AN DEN DREIPUNKT EINES SCHLEPPERS
METHOD AND APPARATUS FOR COUPLING AN AGRICULTUR TOOL TO A THREE POINT HITCH OF AN AGRICULTUR TRACTOR

(30) Priorité: 24.09.2012 FR 1202527
(43) Date de publication de la demande: 29.07.2015
(73) Titulaire: Tracto-Lock, 11400 Verdun en Lauragais (FR)
(72) Inventeur: RIBO Robert, 11400 Verdun En Lauragais (FR); RIBO Romain, 11400 Verdun En Lauragais (FR); BOULNOIS Bastien, 06600 Antibes (FR)
(74) Mandataire: Cabinet Plasseraud
(86) Numéro de dépôt international: PCT/FR2013/000249
(87) Numéro de publication internationale: WO 2014/044932

(56) Documents cités:
- AU-B2- 532 915
- GB-A- 2 040 664
- GB-A- 2 408 669
- US-A- 5 950 735

## Description

L'invention concerne un procédé d'attelage d'un outil agricole sur un système de relevage trois points d'un tracteur agricole, et s'étend à un dispositif de relevage de mise en en oeuvre de ce procédé de relevage..

Tel que l'a notamment mis en exergue un rapport du ministère de l'agriculture français dans un ouvrage collectif intitulé « liaisons tracteur agricole-outil agricole » édité en 2006, les opérations d'attelage et de dételage des outils agricoles sur les dispositifs de relevage trois points des tracteurs agricoles constituent des opérations très délicates à réaliser et sont la cause de nombreux accidents

Malgré cela, les conclusions de ce rapport sont très négatives quant aux éventuelles « innovations technologiques prévisibles dans le cadre des liaisons mécaniques » susceptibles de solutionner ce problème.

En fait, la seule voie privilégiée dans ce rapport consiste en la mise en place de « triangles d'attelage » constitués de deux bâtis en forme de triangle adaptés pour être solidarisés respectivement au système de relevage trois points du tracteur agricole et à l'outil agricole, et sensés être conçus pour s'emboiter l'un dans l'autre en une seule opération réalisée par l'opérateur depuis son poste de conduite.

Toutefois, il s'avère que de tels triangles d'attelage sont connus depuis des dizaines d'années, tel que l'atteste notamment le brevet français FR 1.463.146 qui porte sur un perfectionnement des triangles d'attelage destiné à l'attelage des charrues réversibles, et malgré l'existence ancienne de ces dispositifs d'attelage, leur utilisation est toujours restée très confidentielle. Cette absence d'exploitation réelle de ces dispositifs d'attelage se justifie, en fait, principalement par les difficultés rencontrées par les opérateurs pour arriver à emboiter correctement, les triangles d'attelage sans quitter leur poste de conduite.

En vue notamment de pallier cet inconvénient de nombreuses variantes de réalisation ont été envisagées, notamment décrites dans les brevets FR 1.463.146, US5950.735, GB2.040.664..., parmi lesquelles la variante de réalisation décrite dans le brevet AU 532 915 qui consiste en un dispositif d'attelage dont un des bâtis porte trois organes de centrage de forme conique répartis selon les sommets d'un triangle isocèle présentant une base adaptée pour s'étendre selon un axe transversal (y), et adaptés pour s'engager, chacun, dans un orifice ménagé dans l'autre bâti.

Selon cette solution, les organes d'accouplement des deux bâtis, bien que différents dans leur structure, définissent deux triangles équivalents, dans leur fonction, aux « triangles d'assemblage » classiques : l'accouplement des deux bâtis au moyen d'un tel dispositif d'attelage requiert , en effet, de positionner les trois organes de centrage à l'aplomb des orifices destinés à loger ces derniers, puis de relever le système de relevage trois points de façon à engager les dits organes de centrage dans les dit orifices.

L'avantage apporté par ce dispositif d'attelage par rapport aux triangles d'attelage classiques réside dans la marge de positionnement dans un plan horizontal offerte à l'opérateur grâce à la forme conique des organes d'accouplement. Toutefois, cette seule marge de positionnement s'avère, dans la pratique, insuffisante pour garantir un accouplement aisé des deux bâtis.

La présente invention vise également une solution consistant à réaliser un dispositif d'attelage comportant deux bâtis adaptés pour être solidarisés respectivement au système de relevage trois points du tracteur agricole et à l'outil agricole, et a pour principal objectif de fournir un dispositif d'attelage permettant de réaliser de façon aisée, directement depuis le poste de conduite, la juxtaposition et le verrouillage relatif de ces deux bâtis..

Un autre objectif de l'invention est de fournir un dispositif d'attelage conçu pour permettre d'accoupler directement, depuis le poste de conduite, les arbres de transmission à cardans connectés au tracteur agricole et à l'outil agricole.

A cet effet, l'invention vise, en premier lieu, un procédé d'attelage d'un outil agricole sur un système de relevage trois points d'un tracteur agricole d'axe longitudinal (x), selon lequel :
- on utilise un dispositif d'attelage comportant deux bâtis consistant en un bâti dit d'attelage doté d'organes de fixation au système de relevage trois points du tracteur agricole, et en un bâti dit attelé doté d'organes de fixation à l'outil agricole, adaptés pour s'étendre transversalement par rapport respectivement au tracteur agricole et à l'outil agricole,
- on procède à l'attelage, dans une position initiale de prépositionnement du tracteur agricole relativement à l'outil agricole, par des manoeuvres d'appairage des deux bâtis, puis par le verrouillage relatif des dits bâtis.

Selon l'invention, ce procédé d'attelage consiste :
- à réaliser un dispositif d'attelage :
   - dont le bâti d'attelage et le bâti attelé comportent chacun deux éléments, dits semelles, disposés au niveau de la base des dits bâtis, de façon, d'une part, que les semelles de chaque bâti soient distantes l'une de l'autre et alignées selon un axe transversal (y), et d'autre part, que chaque semelle du bâti d'attelage forme avec une des semelles du bâti attelé une paire de semelles dotées de faces planes de contact ménagées de façon que la face de contact de la semelle du bâti attelé repose sur la face de contact de la semelle du bâti d'attelage dans la position appairée des dits bâtis,
      ▪ une des semelles de chaque paire de semelles étant percée d'un orifice de section et dimensions prédéterminées,
      ▪ et l'autre semelle de chaque paire de semelles comportant, en saillie sur sa face de contact, un organe de centrage de section décroissant selon au moins deux plans perpendiculaires à la dite face de contact et respectivement parallèles aux axes (x) et (y), à partir d'une section de base de dimensions conjuguées de celle de l'orifice de l'autre semelle,
   - comportant des moyens de basculement relatif des deux bâtis,
- et on procède à l'attelage, dans la position initiale de prépositionnement du tracteur agricole relativement à l'outil agricole,
   - (a) en actionnant, le système de relevage de façon à amener chaque organe de centrage à s'engager partiellement dans l'orifice en vis-à-vis, par relevage du bâti d'attelage,
   - puis (b) en engendrant le basculement relatif des deux bâtis de façon à provoquer, dans la position d'engagement partiel des organes de centrage dans les orifices en vis-à-vis, un basculement lors duquel les dits organes de centrage constituent le pivot du dit basculement, jusqu'à obtenir une position finale appairée dans laquelle les faces de contact des semelles de chacune des deux paires de semelles sont superposées au contact l'une de l'autre, et les organes de centrage sont entièrement engagés dans les orifices en vis-à-vis.

   (Il est à noter que par « base » on entend définir selon l'invention, la partie inférieure des bâtis, c'est-à-dire la partie de ces bâtis la plus proche du sol lorsque ces derniers sont montés respectivement sur l'outil agricole et le tracteur agricole. De plus, par « axe transversal (y), on entend définir un axe orthogonal à l'axe longitudinal (x)).
   Le procédé d'attelage selon l'invention consiste donc :
- à réaliser un dispositif d'attelage comportant principalement :
   - deux organes de centrage disposés au niveau de la base d'un des bâtis et alignés le long d'un axe transversal (y), adaptés pour s'engager partiellement chacun dans un orifice ménagé au niveau de la base de l'autre bâti lors du relevage du système de relevage trois points du tracteur agricole,
   - des moyens de basculement relatif des deux bâtis adaptés pour provoquer un basculement lors duquel les organes de centrage constituent le pivot du dit basculement,
- à conférer à ce dispositif d'attelage une cinématique de fonctionnement spécifique se décomposant en deux mouvements successifs :
- un premier mouvement de relevage du bâti accouplé au système de relevage trois points, adapté pour amener les organes de centrage à s'engager partiellement dans l'orifice en vis-à-vis de l'autre bâti,
- un second mouvement de basculement relatif des deux bâtis lors duquel les organes de centrage sont amenés à pénétrer totalement dans les orifices en vis-à-vis et au terme duquel les deux bâtis sont parfaitement accolés dans une position relative permettant leur parfaite solidarisation par le biais de leur verrouillage.

Selon cette conception :
- les défauts de positionnement selon l'axe longitudinal (x) et selon l'axe transversal (y) sont rattrapés lors de la pénétration des organes de centrage dans les orifices en vis-à-vis, jusqu'à obtention, en fin de basculement, d'un engagement total des dits organes de centrage dans les dits orifices,
- les défauts de positionnement vertical sont rattrapés dans la position finale accolée des deux bâtis,
- et, dans la pratique, le dispositif d'attelage permet d'atteler, sans intervention humaine, un outil à un tracteur agricole, sans nécessiter un prépositionnement rigoureux, du fait qu'il permet « d'absorber » des défauts de positionnement relatif des deux bâtis, selon chacun des trois axes (x, y, z).

Selon un premiers mode de mise en oeuvre avantageuse du procédé selon l'invention, on équipe le système de relevage d'un bras central consistant en un vérin, et (b) on engendre le basculement relatif des deux bâtis en commandant le déploiement du dit vérin.

Un tel vérin qui se substitue au tirant usuel réglable en longueur constitue une solution économique en termes de prix de revient (fourniture plus mise en place).

Selon un second mode de mise en oeuvre avantageuse du procédé selon l'invention :
- on équipe le bâti d'attelage d'au moins un bras de basculement articulé sur le dit bâti d'attelage, autour d'un axe d'articulation au moins sensiblement parallèle à l'axe (y) positionné au niveau de la base du dit bâti d'attelage, chacun des dits bras de basculement comportant une extrémité en forme de crochet de préhension, dans la position d'engagement partiel des organes de centrage dans les orifices en vis-à-vis, d'un organe d'accrochage solidaire du bâti attelé,
- (b) on engendre le basculement relatif des deux bâtis en faisant pivoter chaque bras de basculement de façon que son extrémité en forme de crochet parcoure une trajectoire au cours de laquelle elle assure la préhension de l'organe d'accrochage en vis-à-vis, puis entraîne le basculement du bâti d'attelage.

L'invention s'étend à un dispositif d'attelage d'un outil agricole sur un système de relevage trois points d'un tracteur agricole d'axe longitudinal (x), comprenant un dispositif d'attelage comportant deux bâtis consistant en un bâti dit d'attelage doté d'organes de fixation au système de relevage trois points du tracteur agricole, et en un bâti dit attelé doté d'organes de fixation à l'outil agricole, adaptés pour s'étendre transversalement par rapport respectivement au tracteur agricole et à l'outil agricole, les dits bâti d'attelage et bâti attelé étant adaptés pour être appairés et comportant des moyens de verrouillage relatif.

Selon l'invention, ce dispositif d'attelage se caractérise en ce que:
- le bâti d'attelage et le bâti attelé comportent chacun deux éléments, dits semelles, disposés au niveau de la base des dits bâtis, de façon, d'une part, que les semelles de chaque bâti soient distantes l'une de l'autre et alignées selon un axe transversal (y), et d'autre part, que chaque semelle du bâti d'attelage forme avec une des semelles du bâti attelé une paire de semelles dotées de faces planes de contact ménagées de façon que la face de contact de la semelle du bâti attelé repose sur la face de contact de la semelle du bâti d'attelage dans la position appairée des dits bâtis,
   ▪ une des semelles de chaque paire de semelles étant percée d'un orifice de section et dimensions prédéterminées,
   ▪ et l'autre semelle de chaque paire de semelles comportant, en saillie sur sa face de contact, un organe de centrage de section décroissant selon au moins deux plans perpendiculaires à la dite face de contact et respectivement parallèles aux axes (x) et (y), à partir d'une section de base de dimensions conjuguées de celle de l'orifice de l'autre semelle,
   ▪ et les dites semelles étant agencées pour venir en regard l'une de l'autre de façon que chaque organe de centrage s'engage partiellement dans l'orifice en vis-à-vis, lors du relevage du bâti d'attelage engendré par l'actionnement du système de relevage trois points,
- des moyens de basculement relatif des deux bâtis sont adaptés pour provoquer, dans la position d'engagement partiel des organes de centrage dans les orifices en vis-à-vis, un basculement lors duquel les dits organes de centrage constituent le pivot du dit basculement.

Selon une première variante avantageuse de réalisation de l'invention, les moyens de basculement relatif consistent en un vérin disposé de façon à constituer le bras central du système de relevage.

Selon cette variante, en outre, les moyens de verrouillage comportent avantageusement selon l'invention :
- au moins un bras de verrouillage articulé sur le bâti d'attelage, doté d'une extrémité en forme de crochet de préhension, dans la position appairée des deux bâtis, d'un organe d'accrochage solidaire du bâti attelé,
- des moyens d'actionnement de chaque bras de verrouillage aptes à le faire pivoter entre une position déverrouillée et une position verrouillée de blocage de l'organe d'accrochage en vis-à-vis.

Toujours selon cette variante, les moyens de verrouillage peuvent également avantageusement comporter, selon un autre mode de réalisation, un vérin porté par le bâti d'attelage de façon à s'étendre selon un axe transversal orthogonal à l'axe (x), doté d'une tige formant un pêne adapté pour coopérer avec une gâche montée sur le bâti attelé, dans la position appairée des deux bâtis.

Selon une seconde variante avantageuse de réalisation de l'invention, les moyens de basculement relatif comprennent :
- au moins un bras de basculement articulé sur le bâti d'attelage, autour d'un axe d'articulation au moins sensiblement parallèle à l'axe (y), positionné au niveau de la base du dit bâti d'attelage, chacun des dits bras de basculement comportant une extrémité en forme de crochet de préhension, dans la position dans la position d'engagement partiel des organes de centrage dans les orifices en vis-à-vis, d'un organe d'accrochage solidaire du bâti attelé,
- des moyens d'actionnement de chaque bras de basculement aptes à le faire pivoter de façon que son extrémité en forme de crochet parcoure une trajectoire au cours de laquelle elle assure la préhension de l'organe d'accrochage en vis-à-vis, puis entraîne le basculement du bâti d'attelage jusqu'à l'obtention de la position accolée des deux bâtis.

Un tel bras de basculement peut, en outre, avantageusement assurer la fonction de verrouillage des deux bâtis, et à cet effet, de façon avantageuse selon l'invention, l'extrémité en forme de crochet de chaque bras de basculement et chaque organe d'accrochage associé présentent des formes complémentaires adaptées pour assurer le verrouillage des deux bâtis dans leur position appairée.

Par ailleurs, selon cette seconde variante de réalisation, le dispositif d'attelage comporte également, de façon avantageuse selon l'invention, un vérin disposé de façon à constituer le bras central du système de relevage, et destiné, notamment, à permettre une adaptation plus aisée de l'inclinaison du bâti d'attelage à des inclinaisons différentes des outils agricoles.

Selon un autre mode de réalisation avantageux de l'invention visant à augmenter l'amplitude du basculement, chaque orifice ménagé dans une semelle présente une fraisure au niveau de sa jonction avec la face de contact de la dite semelle.

De plus, de façon avantageuse selon l'invention, chaque orifice ménagé dans une semelle consiste, dans le prolongement de la fraisure, en un orifice de section droite constante, et chaque organe de centrage comporte, à partir de la face de contact de la semelle, une base de section droite constante conjuguée de celle de l'orifice en vis-à-vis.

Chaque orifice comporte ainsi une portée d'appui de la base des organes de centrage favorisant la reprise des efforts de cisaillement

A titre de mode de réalisation avantageux, chaque organe de centrage comporte une base cylindrique prolongée d'un tronçon de forme conique ou hémisphérique, chaque orifice ménagé dans une semelle présentant une section circulaire de diamètre conjugué de celui de la base des organes de centrage.

Selon un autre mode de réalisation avantageux de l'invention, le bâti d'attelage et le bâti attelé comportent des faces frontales de contact des dits bâtis dans leur position finale accolée.

De plus, un des bâtis comporte avantageusement, en saillie par rapport à sa face frontale de contact, au moins un pion de centrage de section décroissante selon au moins un plan perpendiculaire à la dite face frontale de contact et parallèle à l'axe longitudinal (x), et l'autre bâti comporte, pour chaque pion de centrage, un orifice débouchant au niveau de sa face frontale, de section adaptée pour loger le dit pion de centrage.

Ces pions de centrage, en outre, avantageusement disposés au niveau d'une portion supérieure du bâti en vue d'être les plus éloignés possible des organes de centrage, permettent de parfaire le positionnement relatif des bâtis dans leur position finale accolée.

Chacun de ces pions de centrage comporte, en outre, deux méplats formés dans des plans parallèles au plan (x, y), et chaque orifice associé comporte des portées planes d'appui de chacun des dits méplats visant à interdire tout débattement relatif des deux bâtis selon un axe (z) orthogonal au plan (x, y).

Selon un autre mode de réalisation avantageux de l'invention, le dispositif d'attelage comprend :
- des organes de transmission complémentaires positionnés respectivement sur le bâti d'attelage et le bâti attelé et adaptés pour être accouplés à des arbres de transmission à cardans équipant le tracteur agricole et l'outil agricole,
- des moyens de déplacement relatif des organes de transmission complémentaires aptes, dans la position appairée des deux bâtis, à les déplacer entre une positon embrayée d'accouplement des deux arbres de transmission à cardans, et une position débrayée.

Ces organes de transmission permettent de réaliser, une fois les deux bâtis verrouillés, l'accouplement entre les arbres de transmission à cardans connectés au tracteur agricole et à l'outil agricole, directement du poste de conduite, par un simple actionnement des moyens de déplacement relatif des dits organes de transmission, de sorte que, selon l'invention, toutes les opérations d'attelage sont intégralement réalisées depuis le poste de conduite.

Selon un mode de réalisation avantageux visant ces organes de transmission, l'organe de transmission du bâti attelé est solidarisé en translation sur le dit bâti attelé, et l'organe de transmission du bâti d'attelage est disposé dans une glissière d'axe de guidage parallèle à l'axe longitudinal (x), fixée au dit bâti d'attelage, le dit organe de transmission étant associé à des moyens de déplacement en translation aptes à le déplacer à l'intérieur de la glissière,

De plus ces organes de transmission comportent avantageusement selon l'invention, respectivement un arbre doté de cannelures et un arbre percé d'un alésage longitudinal doté de cannelures, les dites cannelures formant des dentures complémentaires de formes engageantes.

D'autres caractéristiques buts et avantages de l'invention ressortiront de la description détaillée qui suit en référence aux dessins annexés qui en représentent à titre d'exemples non limitatifs trois modes de réalisation préférentiels. Sur ces dessins :
- la figure 1 est une vue en perspective schématique d'un tracteur agricole équipé d'un bâti d'attelage conforme à un premier mode de réalisation d'un dispositif d'attelage selon l'invention,
- la figure 2 est une vue à échelle agrandie du système de relevage du tracteur agricole représenté à la figure 1, équipé du bâti d'attelage de ce premier mode de réalisation de dispositif d'attelage selon l'invention,
- la figure 3 est une vue en perspective de face de ce bâti d'attelage,
- la figure 4 est une vue en perspective de dos de ce bâti d'attelage,
- la figure 5 est une vue en perspective d'un outil agricole représenté très schématiquement, équipé du bâti attelé conforme au premier mode de réalisation de dispositif d'attelage selon l'invention,
- la figure 6 est une vue en perspective de dos de ce premier mode de réalisation de bâti attelé,
- la figure 7 est une vue en perspective de face de ce bâti attelé,
- la figure 7a est une coupe partielle, par un plan vertical A, d'une semelle de ce bâti attelé,
- les figures 8 et 9 sont des coupes longitudinales représentant les premiers modes de réalisation des bâtis d'attelage et attelé dans leur position accolée, respectivement avant verrouillage (figure 8) et après verrouillage (figure 9),
- les figures 10a à 10e sont des schémas en vue longitudinale représentant les étapes successives de l'attelage d'un outil agricole sur un tracteur agricole, au moyen du premier mode de réalisation de dispositif d'attelage selon l'invention,
- la figure 11 est une vue en perspective de dos d'un bâti d'attelage conforme à un deuxième mode de réalisation de dispositif d'attelage selon l'invention,
- la figure 12 est une vue en perspective de face de ce bâti d'attelage,
- la figure 13 est une vue en perspective de dos d'un bâti attelé conforme au deuxième mode de réalisation de dispositif d'attelage selon l'invention,
- la figure 14 est une coupe longitudinale représentant les bâtis d'attelage et attelé de ce deuxième mode de réalisation de dispositif d'attelage, dans leur position accolée et verrouillée,
- la figure 15 est une vue en perspective de face d'un bâti d'attelage conforme à un troisième mode de réalisation de dispositif d'attelage selon l'invention,
- et la figure 16 est une vue en perspective de face d'un bâti attelé conforme au troisième mode de réalisation de dispositif d'attelage selon l'invention

(A des fins de simplicité et de clarté de la description, les dispositifs d'attelage selon l'invention sont décrits ci-dessous en les considérant solidarisés à un tracteur agricole et un outil agricole reposant sur le sol, les termes vertical, horizontal, inférieur, supérieur... étant utilisés par référence à un tel positionnement. En outre les termes avant, arrière sont utilisés en référence au sens de déplacement en marche avant du tracteur agricole).

Les dispositifs d'attelage représentés à titre d'exemples aux figures respectivement 1 à 10, 11 à 14 et 15, 16 consistent en des dispositifs d'attelage d'un outil agricole 3 sur le système 2 de relevage trois points d'un tracteur agricole 1 d'axe longitudinal (x), le dit système de relevage comportant, de façon usuelle :
- deux bras inférieurs tels que 4 dotés d'une extrémité consistant en un crochet de verrouillage 5 et reliés, chacun, par une chandelle telle que 7 de longueur réglable, à un bras de relevage tel que 6 dont les pivotements sont engendrés par un vérin hydraulique tel que 8,
- un bras central (ou bras supérieur) constitué en l'exemple d'un vérin hydraulique 9.

Chacun de ces dispositifs d'attelage se compose, en outre, d'une part, d'un bâti d'attelage adapté pour être monté sur le système de relevage 2 du tracteur agricole 1, et d'autre part, d'un bâti attelé adapté pour être monté sur l'outil agricole 3, les dits bâtis étant dotés de moyens de verrouillage aptes à les maintenir verrouillés dans une position d'attelage où ils se trouvent accolés.

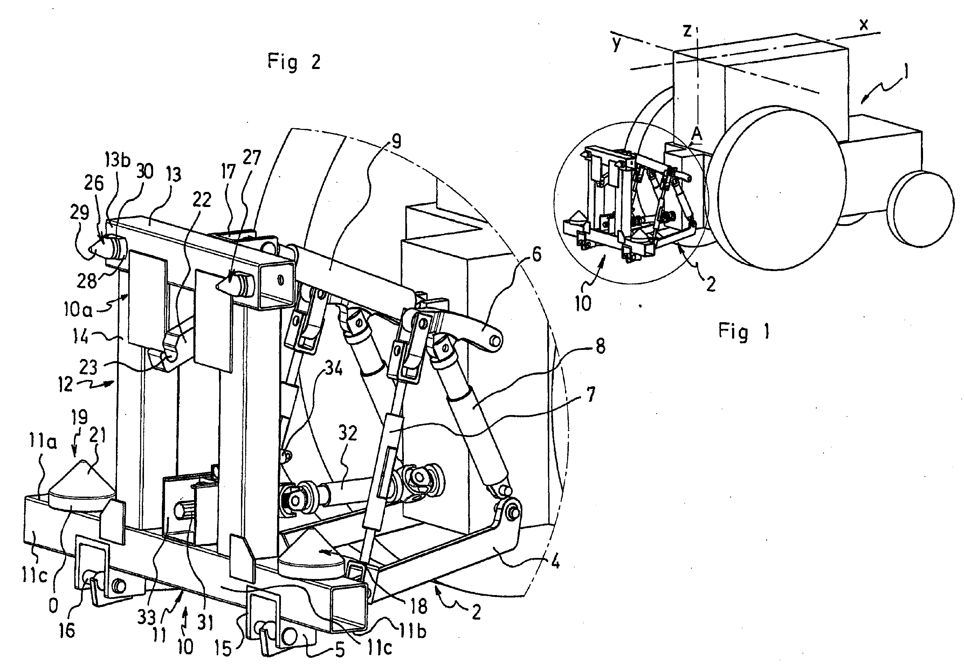

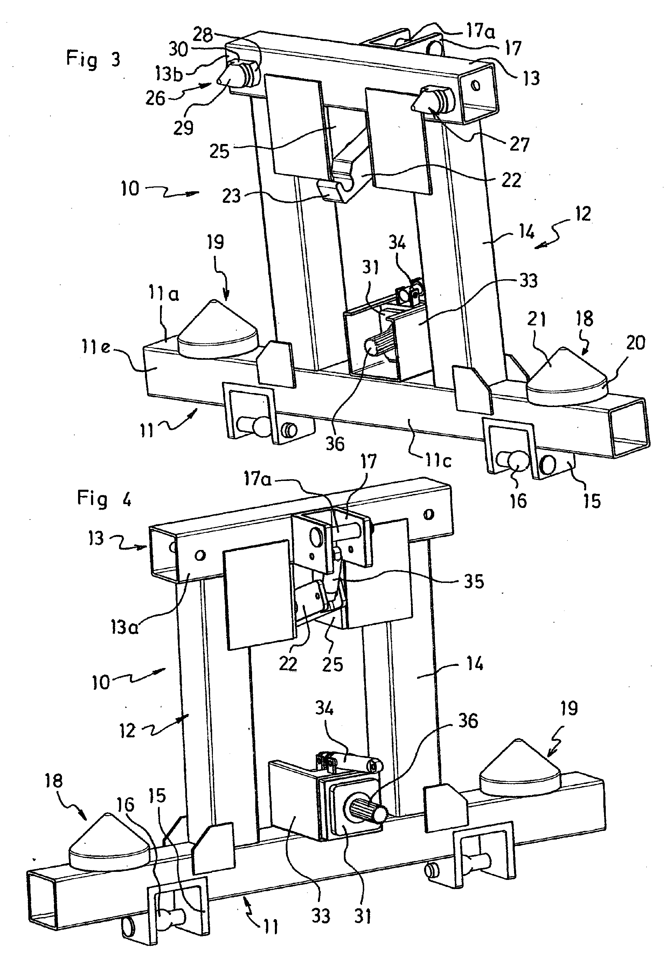

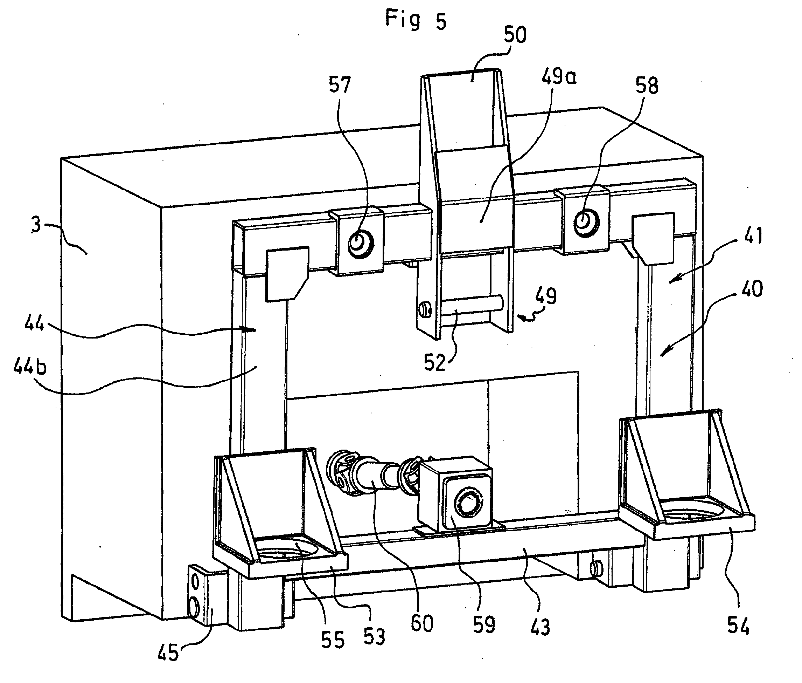

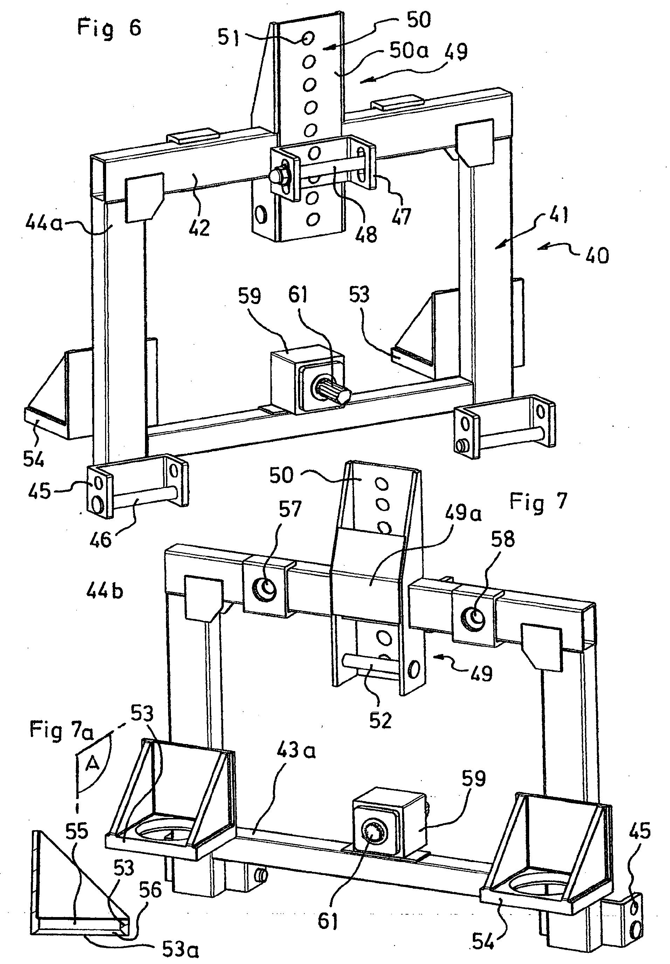

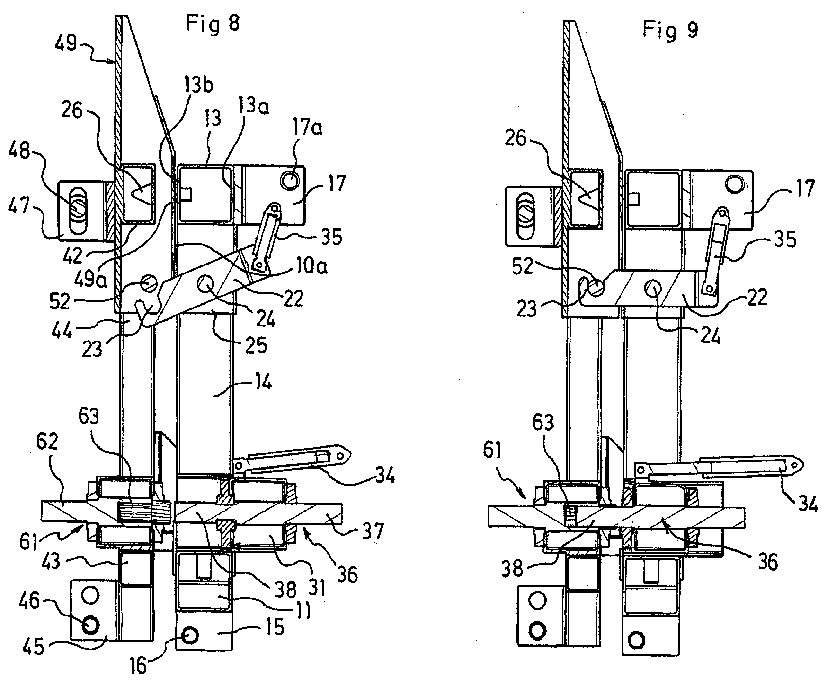

Les figures 1 à 10 représentent un premier mode de réalisation de dispositif d'attelage selon l'invention dont le bâti d'attelage 10 comporte, en premier lieu, une structure mécano-soudée composée :
- d'une traverse 11 adaptée pour s'étendre transversalement selon un axe (y) perpendiculaire à l'axe (x) et constituée, en l'exemple d'un tube de section carrée comportant, notamment, une face supérieure 11a et une face inférieure 11 b,
- et d'un portique 12 formé d'une traverse supérieure 13 et de deux montants tels que 14, constitués de tubes de section carrée, le dit portique s'étendant sur la face supérieure 11 a de la traverse 11, et divisant cette face supérieure 11a en un tronçon central 11c de part et d'autre duquel s'étend un tronçon d'extrémité tel que 11e,
- les dits traverse et portique définissant une face frontale plane de contact 10a.

Ce bâti d'attelage 10 comporte, en outre :
- deux chapes telles que 15 s'étendant sous la face inférieure 11b de la traverse 11, logeant chacune une rotule 16 constituant l'organe d'accrochage du crochet de verrouillage 5 d'un des bras inférieurs 4 du système de relevage 2,
- une chape 17 s'étendant sur la face avant 13a de la traverse supérieure 13 du portique 12, logeant un axe transversal 17a constituant l'organe d'accrochage du bras central 9 du système de relevage 2.

Selon l'invention, ce bâti d'attelage 10 comporte également deus pions de centrage 18, 19 s'étendant en saillie chacun sur le tronçon d'extrémité 11e de la face supérieure 11a de la traverse 11, chacun des dits tronçons d'extrémité constituant une des « semelles » du dit bâti d'attelage..

Chacun de ces pions de centrage 18, 19 comporte, en l'exemple, une base cylindrique 20 prolongée d'un tronçon 21 de forme conique.

Le bâti d'attelage 10 comporte également un bras de verrouillage 22 doté d'une extrémité en forme de crochet 23 s'étendant dans le prolongement arrière de la face frontale de contact 10a du dit bâti d'attelage, le dit bras de verrouillage étant articulé autour d'un axe transversal 24 logé dans une chape 25 s'étendant en sous-face de la traverse supérieure 13 du portique 12.

L'extrémité avant de ce bras de verrouillage 22, opposée au crochet de verrouillage 23, est, en outre, accouplée à la tige d'un vérin 35 dont le corps est articulé dans la chape 17, le dit vérin étant adapté pour faire pivoter le dit bras entre une position de verrouillage et une position de déverrouillage.

Ce bâti d'attelage 10 comporte également deux pions annexes de centrage 26, 27 en saillie sur la face arrière 13b de la traverse supérieure 13 du portique 12, chacun des dits pions de centrage comportant une base cylindrique 28 prolongée d'un tronçon 29 de forme conique.

De plus, chacun de ces pions de centrage 26, 27 présente deux méplats tels que 30 formés dans des plans parallèles à la face supérieure 11a de la traverse 11.

Le bâti d'attelage 10 comporte enfin un organe de transmission 31 adapté pour être accouplé à l'arbre de transmission à cardans 32 équipant le tracteur agricole 1.

Cet organe de transmission 31 décrit en détail plus loin est, en outre, logé dans une glissière 33 d'axe de guidage parallèle à l'axe longitudinal (x), solidarisée sur le tronçon central 11 c de la face supérieure 11a de la traverse 11.

Cet organe de transmission 31 est, enfin, accouplé à la tige d'un vérin 34 dont le corps est articulé sur la glissière 33, le dit vérin étant adapté pour entraîner la translation du dit organe de transmission entre une position de débrayage et une position d'embrayage.

Le bâti attelé 40 de ce premier mode de réalisation de dispositif d'attelage comprend, quant à lui, en premier lieu, une structure mécano-soudée formant un cadre 41 constitué d'une traverse supérieure 42, d'une traverse inférieure 43 et de deux montants tels que 44, constitués de tubes de section rectangulaire.

Ce bâti attelé 40 comporte, en outre, deux chapes telles que 45 s'étendant chacune sur la face arrière 44a d'un montant, au niveau du pied de ce dernier, chacune des dites chapes logeant un axe transversal 46 constituant l'organe d'accrochage d'un organe de verrouillage (non représenté) de l'outil agricole 3.

Ce bâti attelé 40 comporte une troisième chape 47 logeant également un axe transversal 48 constituant l'organe d'accrochage d'un troisième organe de verrouillage (non représenté) de l'outil agricole 3.

Cette chape 47 est solidarisée sur la face externe 50a de l'âme 50 d'une structure profilée 49 en forme générale de U, solidarisée à mi-longueur de la traverse supérieure 42, de façon à s'étendre perpendiculairement à la dite traverse supérieure, de part et d'autre de cette dernière.

Cette âme 50 est, en outre, percée d'une pluralité d'orifices 51 répartis le long d'un axe vertical (z), adaptés pour permettre d'ajuster la position verticale de l'axe transversal 48 en fonction du positionnement de l'organe de verrouillage de l'outil agricole 3.

La structure profilée 49 loge, par ailleurs, dans sa potion inférieure s'étendant sous la traverse supérieure 42 du cadre 40, un axe transversal 52 adapté pour former l'organe d'accrochage du crochet 23 du bras de verrouillage 22 du bâti d'attelage 10.

Il est à noter, en outre que la structure profilée 49 est adaptée pour comporter une face frontale avant 49a définissant une face frontale plane de contact avec la face frontale de contact 10a du bâti d'attelage 10.

Le bâti attelé 40 comporte également deux platines 53, 54 s'étendant dans un plan (x, y) et solidarisées, chacune, sur la face avant 44b d'un montant 44 du cadre 41, sensiblement au niveau de la jonction de ce dernier avec la traverse inférieure 43 du cadre 41.

Chacune de ces platines 53, 54 forme une semelle :
- dotée d'une face inférieure de contact, telle que 53a, adaptée pour venir reposer sur la face supérieure 11a de la traverse 11 du bâti d'attelage 10, dans la position assemblée des deux bâtis 10, 40,
- percée d'un orifice circulaire 55, d'une part, d'un diamètre conjugué du diamètre de la base 20 des pions de centrage 18, 19, et d'autre part présentant une fraisure 56 au niveau de sa jonction avec la face de contact 53a.

Le bâti attelé 40 comporte, par ailleurs, deux orifices circulaires 57, 58 ménagés dan la traverse supérieure 42 du cadre 41, destinés à loger chacun un pion annexe de centrage 26, 27, et à cet effet, présentant un diamètre conjugué du diamètre de la base 28 de ces pions de centrage 26, 27, et comportant des portées planes d'appui de chacun des méplats 30 des dits pions de centrages.

Le bâti attelé 40 comporte également un organe de transmission 59 adapté pour être accouplé à l'arbre de transmission à cardans 60 équipant l'outil agricole 3.

Cet organe de transmission 59 est solidarisé sur la face supérieure 43a de la traverse inférieure 43 du cadre 41, sensiblement à mi-longueur de cette dernière, et comporte un arbre rotatif 61 fixe en translation, doté d'un tronçon arrière cannelé d'attelage 62 d'accouplement avec l'arbre de transmission à cardans 60, et d'un tronçon avant attelé 63 destiné à l'accouplement avec l'organe de transmission 31 du bâti d'attelage 10 et comportant un alésage longitudinal doté de cannelures.

Tel que précité, cet organe de transmission 59 est notamment adapté pour s'accoupler avec l'organe de transmission 31 du bâti d'attelage 10, et ce dernier comporte un arbre rotatif 36 mobile en translation, doté d'un tronçon avant cannelé d'attelage 37 d'accouplement avec l'arbre de transmission à cardans 32 du bâti d'attelage 10, et d'un tronçon arrière cannelé d'attelage 38 d'accouplement avec le tronçon attelé 63 de l'arbre rotatif 61..

De plus, les dentures des cannelures du tronçon avant attelé 63 de l'arbre rotatif 61 et du tronçon arrière cannelé d'attelage 38 de l'arbre rotatif 36 consistent avantageusement en des dentures engageantes de façon à faciliter l'accouplement obtenu par une translation de l'arbre rotatif 36.

Le bâti attelé 40 peut, en outre, être équipé de pieds télescopiques (non représentés), consistant par exemple en des vérins hydrauliques, adaptés pour être déployés sous le cadre 41 du dit bâti attelé de façon à supporter ce dernier après dételage de l'outil agricole 3.

En dernier lieu, les deux bâtis d'attelage 10 et attelé 40 sont dotés de dispositifs complémentaires de connexion hydraulique de tout type connu en soi (non représentés), comportant, en vis-à-vis, une pluralité de connecteurs à connexion automatique lors de l'accouplement des dits dispositifs de connexion hydraulique.

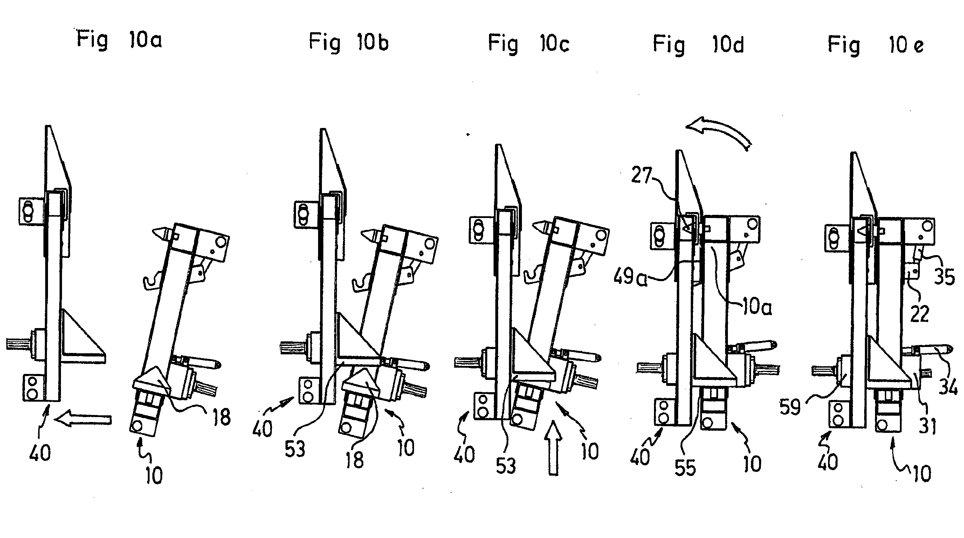

Tel que représenté aux figures 10a à 10e, en vue d'un attelage, le tracteur agricole est reculé (figure 10a) jusqu'à prépositionner les pions de centrage 18, 19 du bâti d'attelage 10 à l'aplomb des orifices 55 des semelles 53 du bâti attelé 40 (figure 10b).

Il est à noter que lors de cette manoeuvre, un dispositif d'attelage dont les pions de centrage présentent une base 20 d'un diamètre de 10 cm, permet de bénéficier d'une marge de positionnement confortable.de l'ordre de 15,cm tant selon l'axe longitudinal (x) que selon l'axe transversal (y).

Une fois ce prépositionnement obtenu, les vérins 8 du système de relevage 2 sont déployés de façon à entraîner le relevage du bâti d'attelage 10, jusqu'à obtenir un contact partiel des faces de contact respectives 11 a, 53a des semelles 11, 53, 54, position dans laquelle les pions de centrage 18, 19 sont partiellement engagés dans les orifices 55 en vis-à-vis (figure 10c).

L'étape suivante consiste à déployer le vérin central 9 de façon à engendre un basculement du bâti d'attelage 10, lors duquel les pions de centrage 18, 19 constituent les pivots du dit basculement, jusqu'à amener les faces frontales 10a, 49a des deux bâtis 10, 40 au contact l'une de l'autre, position dans laquelle les faces en regard 11 a, 53a des semelles 11, 53, 54 sont également au contact l'une de l'autre (figure 10d).

En outre, en fin de basculement, les pions de centrage annexes 26, 27 viennent se loger dans les orifices 57, 58 en vis-à-vis et assurent un parfait blocage relatif des deux bâtis selon l'axe (z), ce blocage étant en outre amélioré par la présence des méplats 30.

Les dernières opérations consistent à verrouiller les deux bâtis 10, 40, par actionnement du vérin 35, opération pendant laquelle le vérin est positionné dans un mode neutre (ou mode « floating ») et à accoupler les organes de transmission 31, 59 et donc les arbres de transmission à cardans 32, 60, par actionnement du vérin 34.

Un tel dispositif d'attelage permet donc de réaliser toutes les opérations d'attelage et de dételage des outils agricoles 3 directement, depuis le poste de conduite moyennant notamment l'adjonction dans ce dernier :
- de moyens d'alimentation (flexibles, distributeurs...) des différents organes hydrauliques (vérins, connecteurs...),
- d'organes de commande disposés dans le poste de conduite, destinés au pilotage des différents organes hydrauliques.

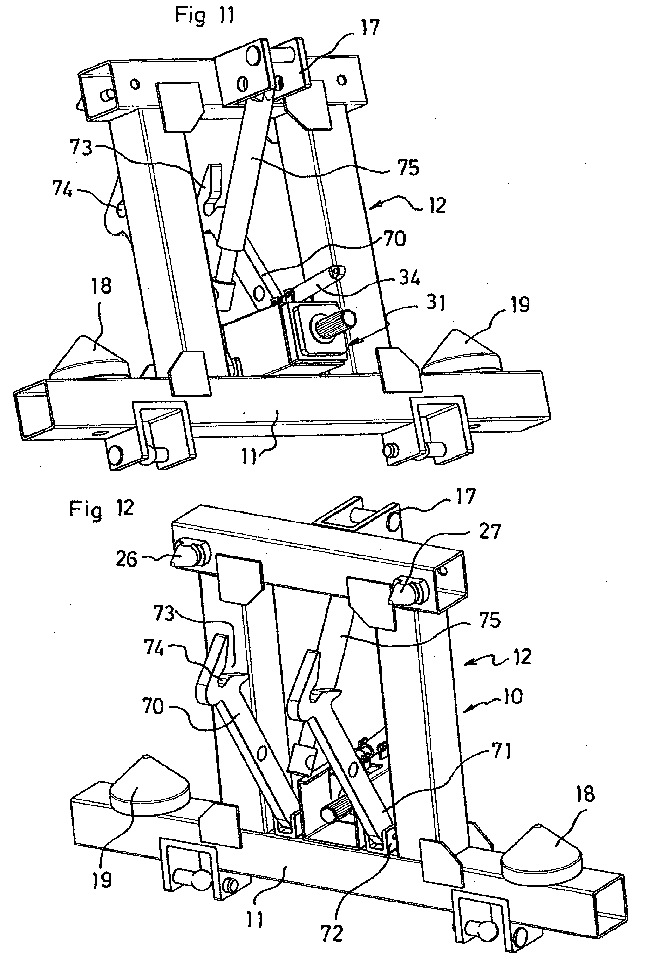

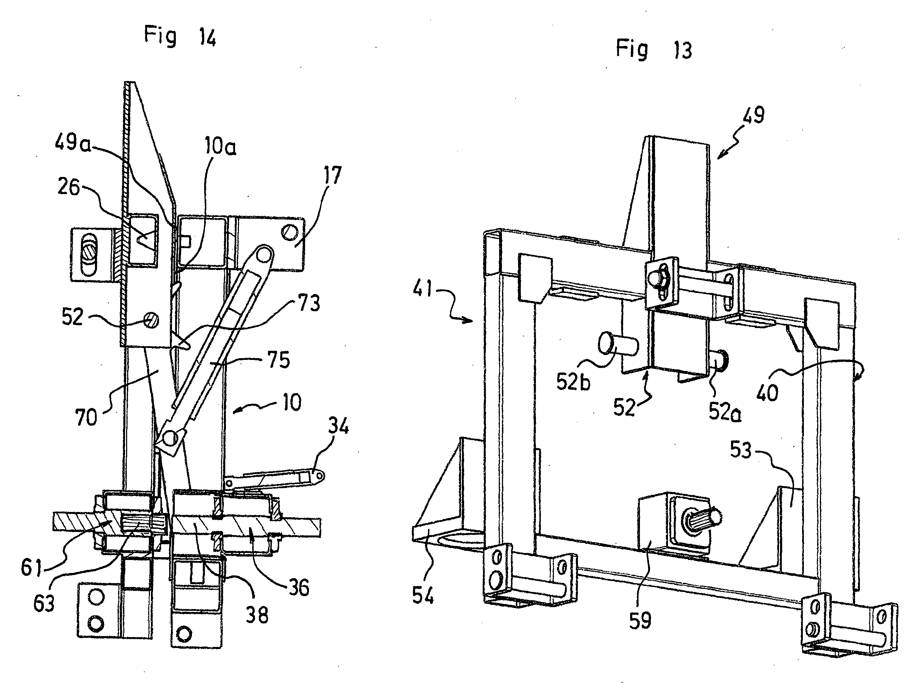

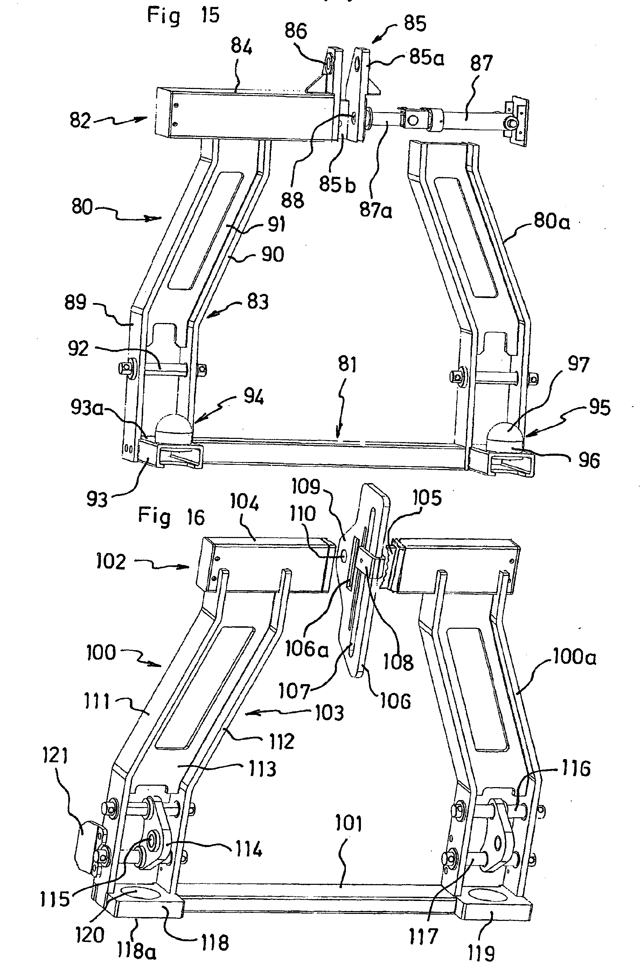

La différence entre le dispositif d'attelage représenté aux figures 11 à 20 et celui décrit ci-dessus réside dans la conception des moyens de basculement relatif des deux bâtis, adaptés, selon ce deuxième mode de réalisation pour remplir deux fonctions : entraîner le basculement du bâti d'attelage 40 et assurer en fin de basculement le verrouillage des deux bâtis.

Par conséquent, seuls les moyens de basculement de ce deuxième mode de réalisation sont décrits en détail ci-dessous. Concernant les autres organes identiques des deux modes de réalisation, ceux-ci sont désignés ci-dessous par les mêmes références numériques que celles utilisées pour le premier mode de réalisation.

Selon ce mode de réalisation, le bras de verrouillage 22 du premier mode de réalisation est supprimé, et le dispositif d'attelage comporte des moyens de basculement comprenant deux bras de verrouillage 70, 71 dont l'extrémité inférieure est montée pivotante autour d'un axe transversal logé dans une chape 72 solidaire de la face supérieure 11a de la traverse 11. L'extrémité supérieure de chacun de ces bras constitue quant à elle une gorge 73 en forme générale de V doté d'un fond de gorge 74 de forme légèrement rétentive.

Ces deux bras 70, 71 sont positionnés au niveau du tronçon central 11 c de la traverse 11, symétriquement de part et d'autre de l'organe de transmission 31. Ils sont actionnés simultanément au moyen d'un vérin unique 75 positionné entre les dits bras, dont la tige est accouplée sensiblement à mi-longueur de ces derniers, et dont le corps est articulé dans la chape 17.

Concernant le bâti attelé 40, la seule modification, par rapport au premier dispositif d'attelage, réside dans la modification de l'axe transversal 52 dont la longueur est augmentée de façon qu'il possède, de part et d'autre de la structure profilée 49, un tronçon 52a, 52b de préhension par un bras de verrouillage 70, 71.

Selon cette solution, le basculement est commandé après actionnement du système de relevage et s'obtient en commandant la rétraction du vérin 75 entraînant un pivotement des deux bras 70, 71 adapté pour que leur extrémité supérieure parcoure une trajectoire au cours de laquelle elle assure la préhension de l'organe d'accrochage 52, puis entraîne le basculement du bâti d'attelage 10 jusqu'à l'obtention de la position accolée des deux bâtis 10, 40 dans laquelle les dits bras assurent, en outre, le verrouillage des dits bâtis.

Il est à noter, en outre, que, tel que représenté aux figures, le bras central 9 (ou bras supérieur) du système de relevage 2 consiste également, selon ce deuxième mode de réalisation, en un vérin hydraulique 9. En effet, ce vérin central 9 permet, selon ce mode de réalisation, d'adapter de façon aisée l'inclinaison du bâti d'attelage à des inclinaisons différentes d'outils agricoles 3.

Tel que le premier mode de réalisation représenté aux figures 1 à 10, le troisième mode de réalisation vise un dispositif d'attelage dont le basculement relatif des deux bâtis est assuré au moyen du vérin 9 formant le bras central du système de relevage trois points.

En premier lieu, le bâti d'attelage 80 de ce dispositif d'attelage présente une forme générale trapézoïdale dotée d'une face frontale plane 80a de contact avec le bâti attelé du dit dispositif d'attelage. Ce bâti d'attelage 80 consiste en une structure mécano-soudée composée d'une traverse inférieure 81 s'étendant entre les extrémités inférieures de deux montants tels que 83 sur les extrémités supérieures desquels s'étend une traverse supérieure 82.

La traverse inférieure 81 consiste en un tube de section rectangulaire.

La traverse supérieure 82 est, quant à elle divisée en trois tronçons consistant en une chape centrale 85 formée de deux ailes 85 réunies par une âme 85b, par rapport à chacune desquelles s'étend un tronçon d'extrémité 84 formé chacun d'un tube 84 de section carrée.

De plus, les deux ailes 85a présentent une hauteur supérieure à la hauteur des tubes 84, et possèdent ainsi des portions de surface s'étendant dans le prolongement de la face supérieure des dits tubes, dans chacune desquelles sont percés en vis-à-vis des orifices 86 destinés à loger un axe transversal constituant l'organe d'accrochage du bras central 9 du système de relevage 2.

De plus, un des tronçons tubulaires d'extrémité 84 de cette traverse supérieure 84 loge un vérin hydraulique 87 agencé de façon que sa tige 87a puisse être déployée dans la chape 85 au travers d'un orifice 88 ménagé dans l'aile 85a obstruant la face d'extrémité centrale du dit tronçon d'extrémité.

Les deux montants 83 sont, quant à eux, constitués de deux fers plats parallèles 89, 90 pliés de façon à présenter un profil longitudinal coudé conférant au bâti d'attelage 80 sa forme trapézoïdale, les dits fers plats étant reliés, sensiblement sur les deux tiers de leur portion supérieure, par une entretoise 91 leur conférant une section en forme de H.

De plus, chacun de ces montants 83 loge, dans sa portion inférieure dépourvue d'entretoise 91, un axe 92 s'étendant entre les deux fers plats 89, 90, formant l'organe d'accrochage du crochet de verrouillage 5 d'un des bras inférieurs 4 du système de relevage 2.

Ce bâti d'attelage 80 comporte, par ailleurs, deux semelles telles que 93 dotées de faces supérieures planes de contact 93a, logées et fixées chacune entre les extrémités inférieures des fers plats 89, 90 d'un montant 83, de façon à s'étendre dans le prolongement de la traverse inférieure 81.

Le bâti d'attelage 80 comporte enfin deux pions de centrage 94, 95 s'étendant en saillie chacun sur la face plane de contact 93a d'une semelle 93, et comportant, chacun une base cylindrique 96 prolongée d'un tronçon hémisphérique 97.

Le bâti attelé 100 de ce dispositif de relevage présente également une forme générale trapézoïdale dotée d'une face frontale plane 100a de contact avec le bâti d'attelage 80 du dit dispositif d'attelage. Ce bâti attelé 100 consiste en une structure mécano-soudée composée d'une traverse inférieure 101 s'étendant entre les extrémités inférieures de deux montants tels que 103 sur les extrémités supérieures desquels s'étend une traverse supérieure 102.

La traverse inférieure 101 consiste en un tube de section rectangulaire.

La traverse supérieure 102 est, quant à elle, divisée en trois tronçons consistant en une platine verticale centrale 105 (dont seule une portion est représentée) de part et d'autre de laquelle s'étend un tronçon d'extrémité 104 formé d'un tube de section carrée.

La platine centrale 105 sert, en outre, de support de fixation d'une plaque 106 de liaison du bâti attelé 100 à l'outil agricole 3, et de verrouillage, comportant, en vue de cette fixation une lumière verticale 106a au travers de laquelle s'étend la dite platine.

En vue de la liaison avec l'outil agricole 3, cette plaque 106 comporte une portion postérieure dans laquelle est ménagée une lumière verticale 107 destinée à loger un axe de fixation porté par l'outil agricole 3.

Une telle lumière 107 permet ainsi d'adapter le bâti attelé 100 à une large plage de hauteurs de l'organe de fixation supérieur des outils agricoles.

Compte tenu de cette longueur de la lumière 107, la plaque 106 est, en outre, équipée de deux plats de renfort tels que 108 adaptés pour enserrer la dite plaque au niveau de la dite lumière.

La plaque 106 comporte également une portion antérieure 109 adaptée pour s'insérer dans la chape 85 du bâti d'attelage 80 , percée d'un orifice 110 ménagé de façon à coïncider avec l'orifice 88, dans la position appairée des deux bâtis 80, 100, de façon à entraîner le verrouillage relatif des dits bâtis pat déploiement de la tige 87a du vérin 87.

Les deux montants 103 de ce bâti attelé 100 sont similaires à ceux du bâti d'attelage 80 et sont constitués de deux fers plats parallèles 111, 112 pliés de façon à présenter un profil longitudinal coudé conférant au bâti attelé 100 sa forme trapézoïdale, les dits fers plats étant reliés, sensiblement sur les deux tiers de leur portion supérieure, par une entretoise 113 leur conférant une section en forme de H.

De plus, chacun de ces montants 103 loge, dans sa portion inférieure dépourvue d'entretoise 113, deux axes superposés 116, 117 s'étendant entre les deux fers plats 111, 112, formant les tiges de guidage d'un coulisseau 114 agencé pour se déplacer le long des dits axes sur une course correspondant à la distance séparant les deux fers plats 111, 112.

Chaque coulisseau 114 constitue une pièce de liaison du bâti attelé 100 avec l'outil agricole 3, et en vue de cette liaison, ce coulisseau 114 est percé d'un orifice 115 destiné à loger un axe de fixation porté par le dit outil agricole.

De plus, du fait de la faculté de chaque coulisseau 114 à pouvoir être déplacé sur une course prédéterminée, le bâti attelé 100 peut équiper, sans nécessiter d'adaptation, des outils agricoles 3 de différentes largeurs.

Le bâti attelé 100 comporte, par ailleurs, deux semelles 118, 119 dotées de faces inférieures planes de contact 118a, logées et fixées chacune entre les extrémités inférieures des fers plats 111, 112 d'un montant 103, de façon à s'étendre dans le prolongement de la traverse inférieure 101.

Chacune de ces semelles 118, 119 est percée d'un orifice circulaire 120, d'une part, d'un diamètre conjugué du diamètre de la base 96 des pions de centrage 94, 95, et d'autre part présentant une fraisure (non représentée) au niveau de sa jonction avec la face de contact 118a.

En dernier lieu, le bâti attelé comporte, disposée sur la face interne de chaque montant 103, une plaque de guidage 121disposée au niveau du tronçon inférieur du dit montant.

Chacune de ces plaques de guidage 121 est inclinée de façon à diverger par rapport à un plan vertical longitudinal (plan dans lequel s'étend l'axe (x)), et forme ainsi une rampe de guidage du bâti d'attelage 80 lors du basculement de ce dernier, adaptée pour rattraper un éventuel jeu de positionnement relatif de ce bâti d'attelage 80.

La procédure d'attelage au moyen de ce troisième mode de réalisation de dispositif d'attelage est similaire à celle du premier mode de réalisation.

Une fois le prépositionnement du tracteur agricole 1 réalisé, les vérins 8 du système de relevage 2 sont déployés de façon à entraîner le relevage du bâti d'attelage 80, jusqu'à obtenir un contact partiel des faces de contact respectives 93a, 118a des semelles 93, 118, 119, position dans laquelle les pions de centrage 94, 95 sont partiellement engagés dans les orifices 120 en vis-à-vis.

L'étape suivante consiste à déployer le vérin central 9 de façon à engendre un basculement du bâti d'attelage 80, lors duquel les pions de centrage 94, 95 constituent les pivots du dit basculement, jusqu'à amener les faces frontales 80a, 100a des deux bâtis 80, 100 au contact l'une de l'autre, position dans laquelle les faces en regard 93a, 118a des semelles 93, 118, 119 sont également au contact l'une de l'autre.

En outre, dans cette position finale appairée des deux bâtis 80, 100, la portion antérieure 109 de la plaque 106, formant une gâche, est insérée dans la chape, et le vérin 87 peut donc être activé de façon à assurer le verrouillage relatif des dits bâtis.

Il est à noter que le positionnement correct de la gâche 109 peut, en outre, être confirmé avant actionnement du vérin 87 moyennant d'équiper le bâti d'attelage 80 d'un capteur de détection de la présence de ladite gâche.

Les dispositifs d'attelage selon l'invention décrits ci-dessus sont donc adaptés pour permettre à un opérateur d'habileté moyenne de réaliser, sans quitter son poste de conduite, toutes les opérations d'attelage d'un outil agricole au système de relevage d'un tracteur agricole : attelage proprement dit de l'outil agricole, et accouplement des arbres de transmission à cardans.

## Revendications

1. Procédé d'attelage d'un outil agricole (3) sur un système de relevage trois points (2) d'un tracteur agricole (1) d'axe longitudinal (x), selon lequel :
- on réalise un dispositif d'attelage comportant :
• deux bâtis (10, 40; 80, 100) adaptés pour s'étendre transversalement par rapport respectivement au tracteur agricole (1) et à l'outil agricole, et pour être appairés, et consistant en un bâti dit d'attelage (10 ; 80) doté d'organes de fixation (16, 17a ; 92) au système de relevage trois points (2) du tracteur agricole (1), et en un bâti dit attelé (40; 100) doté d'organes de fixation (46, 48 ; 106, 107, 114) à l'outil agricole (3), les dits bâti d'attelage et bâti attelé comportant chacun deux éléments (11, 53, 54 ; 93, 118, 119), dits semelles, disposés au niveau de la base de ces bâtis, de façon, d'une part, que les semelles (11, 53, 54 ; 93, 118, 119) de chaque bâti (10, 40 ; 80, 100) soient distantes l'une de l'autre et alignées selon un axe transversal (y), et d'autre part, que chaque semelle (11 ; 93) du bâti d'attelage (10 ; 80) forme avec une des semelles (53, 54 ; 118, 119) du bâti attelé (40 ; 100), une paire de semelles (11/53, 11/54 ; 93/118, 93/119) dotées de faces planes de contact (11a, 53a ; 93a, 118a) ménagées de façon que la face de contact (53a ; 118a) de la semelle (53, 54 ; 118, 119) du bâti attelé (40 ; 100) repose sur la face de contact (11 a ; 93a) de la semelle (11 ; 93) du bâti d'attelage (10 ; 80) dans la position appairée des dits bâtis :
▪ une des semelles (53, 54 ; 118 ; 119) de chaque paire de semelles ((11/53, 11/54 ; 93/118, 93/119) étant percée d'un orifice (55 ; 120) de section et dimensions prédéterminées,
▪ et l'autre semelle (11 ; 93) de chaque paire de semelles (11/53, 11/54 ; 93/118, 93/119) comportant, en saillie sur sa face de contact (11 a ; 93a), un organe de centrage (18, 19 ; 94, 95) de section décroissant selon au moins deux plans perpendiculaires à la dite face de contact et respectivement parallèles aux axes (x) et (y), à partir d'une section de base de dimensions conjuguées de celle de l'orifice (55 ; 120) de l'autre semelle (53, 54 ; 118, 119),
• des moyens de basculement (9 ; 70, 71, 75) adaptés pour engendrer, dans une position dans laquelle les deux organes de centrage (18, 19 ; 94, 95) sont engagés au moins partiellement dans les orifices (55 ; 120) en vis-à-vis, un basculement relatif des deux bâtis (10, 40 ; 80, 100) lors duquel les dits deux organes de centrage constituent le pivot du dit basculement.
- et on procède à l'attelage, dans une position initiale de prépositionnement du tracteur agricole (1) relativement à l'outil agricole (3) :
• (a) en actionnant, dans un premier temps, le système de relevage (2) de façon à amener chacun des dits deux organes de centrage (18, 19) à s'engager partiellement dans l'orifice (55 , 120) en vis-à-vis, par relevage du bâti d'attelage,
• (b) en engendrant ensuite le basculement relatif des deux bâtis (10, 40) de façon à provoquer, dans la position d'engagement partiel des dits deux organes de centrage (18, 19 ; 94, 95) dans les orifices (55 ; 120) en vis-à-vis, un basculement lors duquel les dits deux organes de centrage constituent le pivot du dit basculement, jusqu'à obtenir une position finale appairée dans laquelle les faces de contact (11a, 53a ; 93a, 118a) des semelles (11, 53, 54 ; 93, 118, 119) de chacune des deux paires de semelles (11/53, 11/54 ; 93/118, 93/119) sont superposées au contact l'une de l'autre, et les dits deux organes de centrage (18, 19 ; 94, 95) sont entièrement engagés dans les orifices (55 ; 120) en vis-à-vis,
• (c) et en assurant un verrouillage relatif des deux bâtis (10, 40).

2. Procédé d'attelage selon la revendication 1 **caractérisé en ce que** l'on équipe le système de relevage (2) d'un bras central (9) consistant en un vérin, et (b) **en ce que** l'on engendre le basculement relatif des deux bâtis (10, 40 ; 80, 100) en commandant le déploiement du dit vérin.

3. Procédé d'attelage selon la revendication 1 **caractérisé en ce que** :
- on équipe le bâti d'attelage (10) d'au moins un bras de basculement (70, 71) articulé sur le dit bâti d'attelage (10), autour d'un axe d'articulation au moins sensiblement parallèle à l'axe (y) positionné au niveau de la base du dit bâti d'attelage, chacun des dits bras de basculement comportant une extrémité (73, 74) en forme de crochet de préhension, dans la position d'engagement partiel des dits deux organes de centrage (18, 19) dans les orifices (55) en vis-à-vis, d'un organe d'accrochage (52) solidaire du bâti attelé (40),
(b) on engendre le basculement relatif des deux bâtis en faisant pivoter chaque bras de basculement (70, 71) de façon que son extrémité en forme de crochet (73, 74) parcoure une trajectoire au cours de laquelle elle assure la préhension de l'organe d'accrochage (52) en vis-à-vis, puis entraîne le basculement du bâti d'attelage (10).

4. Dispositif d'attelage d'un outil agricole (3) sur un système de relevage trois points (2) d'un tracteur agricole (1) d'axe longitudinal (x), comprenant un dispositif d'attelage comportant deux bâtis (10, 40 ; 80, 100) adaptés pour s'étendre transversalement par rapport respectivement au tracteur agricole (1) et à l'outil agricole (3), et pour être appairés, et consistant en un bâti dit d'attelage (10 ; 80) doté d'organes de fixation (16, 17a ; 92) au système de relevage trois points (2) du tracteur agricole (1), et en un bâti dit attelé (40 ; 100) doté d'organes de fixation (46, 48 ; 106, 107, 114) à l'outil agricole (3) :
- le dit bâti d'attelage et le dit bâti attelé comportant chacun deux éléments (11, 53, 54 ; 93, 118, 119), dits semelles, disposés au niveau de la base des dits bâtis, de façon, d'une part, que les semelles (11, 53, 54 ; 93, 118, 119) de chaque bâti (10, 40 ; 80, 100) soient distantes l'une de l'autre et alignées selon un axe transversal (y), et d'autre part, que chaque semelle (11 ; 93) du bâti d'attelage (10 ; 80) forme avec une des semelles (53, 54 ; 118, 119) du bâti attelé (40 ; 100), une paire de semelles (11/53, 11/54 ; 93/118, 93/119) dotées de faces planes de contact (11a, 53a ; 93a, 118a) ménagées de façon que la face de contact (53a ; 118a) de la semelle (53, 54 ; 118, 119) du bâti attelé (40 ; 100) repose sur la face de contact (11a ; 93a) de la semelle (11 ; 93) du bâti d'attelage (10 ; 80) dans la position appairée des dits bâtis,
▪ une des semelles (53, 54 ; 118 ; 119) de chaque paire de semelles ((11/53, 11/54 ; 93/118, 93/119) étant percée d'un orifice (55 ; 120) de section et dimensions prédéterminées,
▪ et l'autre semelle (11 ; 93) de chaque paire de semelles (11/53, 11/54 ; 93/118, 93/119) comportant, en saillie sur sa face de contact (11a ; 93a), un organe de centrage (18, 19; 94, 95) de section décroissant selon au moins deux plans perpendiculaires à la dite face de contact et respectivement parallèles aux axes (x) et (y), à partir d'une section de base de dimensions conjuguées de celle de l'orifice (55 ; 120) de l'autre semelle (53, 54 ; 118, 119),
- le dit bâti d'attelage et bâti attelé comportant des moyens de verrouillage relatif (22, 23, 52 ; 70, 71 52 ; 87, 109, 110) dans leur position appairée,
le dit dispositif d'attelage étant **caractérisé en ce que** les dites semelles sont agencées pour venir en regard l'une de l'autre de façon que chacun des deux organes de centrage (18, 19 ; 94, 95) :
- s'engage partiellement dans l'orifice (55 ; 120) en vis-à-vis, lors du relevage du bâti d'attelage (10 ; 80) engendré par l'actionnement du système de relevage trois points (2),
- permette, à des moyens de basculement relatif (9 ; 70, 71, 75) des deux bâtis (10, 40 ; 80, 100), de provoquer, dans la dite position d'engagement partiel des dits deux organes de centrage dans les orifices (55 ; 120) en vis-à-vis, un basculement lors duquel les dits deux organes de centrage (18, 19; 94, 95) constituent le pivot du dit basculement, jusqu'à obtenir la position finale appairée.

5. Dispositif d'attelage selon la revendication 4 **caractérisé en ce que** les moyens de basculement relatif consistent en un vérin (9) disposé de façon à constituer le bras central du système de relevage (2).

6. Dispositif d'attelage selon la revendication 5 **caractérisé en ce que** les moyens de verrouillage comportent :
- au moins un bras de verrouillage (22) articulé sur le bâti d'attelage (10), doté d'une extrémité (23) en forme de crochet de préhension, dans la position appairée des deux bâtis (10, 40), d'un organe d'accrochage (52) solidaire du bâti attelé (40),
- des moyens d'actionnement (35) de chaque bras de verrouillage (22) aptes à le faire pivoter entre une position déverrouillée et une position verrouillée de blocage de l'organe d'accrochage (52) en vis-à-vis.

7. Dispositif d'attelage selon la revendication 5 **caractérisé en ce que** les moyens de verrouillage comportent un vérin (87) porté par le bâti d'attelage (80) de façon à s'étendre selon un axe transversal orthogonal à l'axe (x), doté d'une tige (87a) formant un pêne adapté pour coopérer avec une gâche (109, 110) montée sur le bâti attelé (100), dans la position appairée des deux bâtis (80, 100).

8. Dispositif d'attelage selon la revendication 4 **caractérisé en ce que** les moyens de basculement relatif comprennent :
- au moins un bras de basculement (70, 71) articulé sur le bâti d'attelage (10), autour d'un axe d'articulation au moins sensiblement parallèle à l'axe (y) positionné au niveau de la base du dit bâti d'attelage, chacun des dits bras de basculement comportant une extrémité (73, 74) en forme de crochet de préhension, dans la position dans la position d'engagement partiel des dits deux organes de centrage (18, 19) dans les orifices (55) en vis-à-vis, d'un organe d'accrochage (52) solidaire du bâti attelé (40),
- des moyens d'actionnement (75) de chaque bras de basculement (70, 71) aptes à le faire pivoter de façon que son extrémité en forme de crochet (73, 74) parcoure une trajectoire au cours de laquelle elle assure la préhension de l'organe d'accrochage (52) en vis-à-vis, puis entraîne le basculement du bâti d'attelage (10) jusqu'à l'obtention de la position accolée des deux bâtis (10, 40).

9. Dispositif d'attelage selon la revendication 8 **caractérisé en ce que** l'extrémité en forme de crochet (73, 74) de chaque bras de basculement (70, 71) et chaque organe d'accrochage (52) associé présentent des formes complémentaires adaptées pour assurer le verrouillage des deux bâtis (10, 40) dans leur position appairée.

10. Dispositif d'attelage selon l'une des revendications 8 ou 9 **caractérisé en ce qu'**il comporte un vérin (9) disposé de façon à constituer le bras central du système de relevage (2).

11. Dispositif d'attelage selon l'une des revendications 4 à 10 **caractérisé en ce que** chaque orifice (55 ; 120) ménagé dans une semelle (53, 54 ; 118, 119) présente une fraisure (56) au niveau de sa jonction avec la face de contact (53a ; 118a) de la dite semelle.

12. Dispositif d'attelage selon la revendication 11 **caractérisé en ce que** :
- chaque orifice (55 ; 120) ménagé dans une semelle (53, 54 ; 118, 119) consiste, dans le prolongement de la fraisure (56), en un orifice de section droite constante,
- chacun des dits deux organes de centrage (18,19 ; 94, 95) comporte, à partir de la face de contact (11a ; 93a) de la semelle (11 ; 93), une base (20 ; 96) de section droite constante conjuguée de celle de l'orifice (55 ; 120) en vis-à-vis.

13. Dispositif d'attelage selon revendication 12 **caractérisé en ce que** chacun des dits deux organes de centrage (18, 19; 94, 95) comporte une base cylindrique (20 ; 96) prolongée d'un tronçon (21 ; 97) de forme conique ou hémisphérique, chaque orifice (55 ; 120) ménagé dans une semelle (53, 54; 118, 119) présentant une section circulaire de diamètre conjugué de celui de la base (20 ; 96) des dits deux organes de centrage (18, 19 ; 94, 95).

14. Dispositif d'attelage selon l'une des revendications 4 à 13 **caractérisé en ce que** le bâti d'attelage (10 ; 80) et le bâti attelé (40 ; 100) comportent des faces frontales (10a, 49a ; 80a,100a) de contact des dits bâtis dans leur position finale accolée.

## Patentansprüche

1. Verfahren zum Ankuppeln eines landwirtschaftlichen Gerätes (3) an ein Dreipunkt-Hubsystem (2) einer landwirtschaftlichen Zugmaschine (1) mit einer Längsachse (x), bei dem:
- man eine Kupplungsvorrichtung ausbildet, umfassend:
• zwei Gestelle (10, 40; 80, 100), die dazu eingerichtet sind, sich jeweils quer zur landwirtschaftlichen Zugmaschine (1) bzw. zum landwirtschaftlichen Gerät zu erstrecken und gepaart zu werden, und die aus einem sogenannten Kupplungsgestell (10; 80), das mit Befestigungsorganen (16, 17a; 92) zur Befestigung am Dreipunkt-Hubsystem (2) der landwirtschaftlichen Zugmaschine (1) ausgestattet sind, und aus einem sogenannten angekuppelten Gestell (40; 100) bestehen, das mit Befestigungsorganen (46, 48; 106, 107, 114) zur Befestigung am landwirtschaftlichen Gerät (3) ausgestattet ist, wobei das Kupplungsgestell und das angekuppelte Gestell jeweils zwei Elemente (11, 53, 54; 93, 118, 119) umfassen, die als Auflageplatten bezeichnet werden und auf Höhe der Basis dieser Gestelle angeordnet sind, so dass einerseits die Auflageplatten (11, 53, 54; 93, 118, 119) jedes Gestells (10, 40; 80, 100) voneinander beabstandet und entlang einer Querachse (y) ausgerichtet sind, und andererseits jede Auflageplatte (11; 93) des Kupplungsgestells (10; 80) mit einer der Auflageplatten (53, 54; 118, 119) des angekuppelten Gestells (40; 100) ein Paar Auflageplatten (11/53, 11/54; 93/118, 93/119) bildet, die mit ebenen Kontaktflächen (11a, 53a; 93a, 118a) ausgestattet sind, die so ausgebildet sind, dass die Kontaktfläche (53a; 118a) der Auflageplatte (53, 54; 118, 119) des angekuppelten Gestells (40; 100) in der gepaarten Stellung der Gestelle auf der Kontaktfläche (11a; 93a) der Auflageplatte (11; 93) des Kupplungsgestells (10; 80) aufliegt,
▪ wobei in einer der Auflageplatten (53, 54; 118; 119) jedes Paars von Auflageplatten ((11/53, 11/54; 93/118, 93/119) eine Öffnung (55; 120) mit vorbestimmtem Querschnitt und vorbestimmten Abmessungen ausgebildet ist,
▪ und die andere Auflageplatte (11; 93) jedes Paars von Auflageplatten (11/53, 11/54; 93/118, 93/119) ein von ihrer Kontaktfläche (11a; 93a) vorstehendes Zentrierorgan (18, 19; 94, 95) mit einem Querschnitt umfasst, der sich entlang wenigstens zweier, senkrecht zur Kontaktfläche und jeweils parallel zu den Achsen (x) und (y) verlaufender Ebenen, ausgehend von einem Grundquerschnitt mit Abmessungen, die der Öffnung (55; 120) der anderen Auflageplatte (53, 54; 118, 119) entsprechen, verringert,
• Schwenkmittel (9; 70, 71, 75), die dazu eingerichtet sind, in einer Position, in der die beiden Zentrierorgane (18, 19; 94, 95) zumindest teilweise mit den gegenüberliegenden Öffnungen (55; 120) in Eingriff treten, eine Relativverschwenkung der beiden Gestelle (10, 40; 80, 100) zu erzeugen, bei der die beiden Zentrierorgane den Drehpunkt der Verschwenkung bilden,
- und man die Verkupplung in einer Ausgangsposition zur Vorpositionierung der landwirtschaftlichen Zugmaschine (1) relativ zum landwirtschaftlichen Gerät (3) vornimmt:
• (a) indem man zunächst das Hubsystem (2) betätigt, um jedes der beiden Zentrierorgane (18, 19) durch Anheben des Kupplungsgestells in teilweisen Eingriff mit der gegenüberliegenden Öffnung (55, 120) zu führen,
• (b) indem man anschließend die Relativverschwenkung der beiden Gestelle (10, 40) erzeugt, um in der Position des teilweisen Eingriffs der beiden Zentrierorgane (18, 19; 94, 95) in die gegenüberliegenden Öffnungen (55; 120) eine Verschwenkung zu bewirken, bei der die beiden Zentrierorgane den Drehpunkt der Verschwenkung bilden, bis eine gepaarte Endstellung erreicht ist, in der die Kontaktflächen (11a, 53a; 93a, 118a) der Auflageplatten (11, 53, 54; 93, 118, 119) jedes der beiden Paare von Auflageplatten (11/53, 11/54; 93/118, 93/119) in gegenseitigem Kontakt übereinander liegen, und die beiden Zentrierorgane (18, 19; 94, 95) in vollständigem Eingriff mit den gegenüberliegenden Öffnungen (55; 120) stehen,
• (c) und indem man eine gegenseitige Verriegelung der beiden Gestelle (10, 40) sicherstellt.

2. Kupplungsverfahren nach Anspruch 1, **dadurch gekennzeichnet, dass** man das Hubsystem (2) mit einem zentralen Arm (9) versieht, der aus einem Zylinder besteht, und (b) dass man die Relativverschwenkung der beiden Gestelle (10, 40; 80, 100) durch Steuern des Ausfahrens des Zylinders erzeugt.

3. Kupplungsverfahren nach Anspruch 1, **dadurch gekennzeichnet, dass**:
- man das Kupplungsgestell (10) mit mindestens einem Schwenkarm (70, 71) versieht, der an das Kupplungsgestell (10) um eine Gelenkachse zumindest im Wesentlichen parallel zur auf Höhe der Basis des Kupplungsgestells angeordneten Achse (y) angelenkt ist, wobei jeder der Schwenkarme ein Ende (73, 74) in Form eines Hakens zum Greifen eines Rastorgans (52), das fest mit dem angekuppelten Gestell (40) verbunden ist, in der Position des teilweisen Eingriffs der Zentrierorgane (18, 19) in die gegenüberliegenden Öffnungen (55), umfasst,
(b) man die Relativverschwenkung der beiden Gestelle erzeugt, indem man jeden Schwenkarm (70, 71) so verschwenkt, dass dessen hakenförmiges Ende (73, 74) einer Bahn folgt, in deren Verlauf es das Greifen des gegenüberliegenden Rastorgans (52) sicherstellt und anschließend das Verschwenken des Kupplungsgestells (10) bewirkt.

4. Vorrichtung zum Ankuppeln eines landwirtschaftlichen Gerätes (3) an ein Dreipunkt-Hubsystem (2) einer landwirtschaftlichen Zugmaschine (1) mit einer Längsachse (x), umfassend eine Kupplungsvorrichtung mit zwei Gestellen (10, 40; 80, 100), die dazu eingerichtet sind, sich jeweils quer zur landwirtschaftlichen Zugmaschine (1) bzw. zum landwirtschaftlichen Gerät (3) zu erstrecken und gepaart zu werden, und die aus einem sogenannten Kupplungsgestell (10; 80), das mit Befestigungsorganen (16, 17a; 92) zur Befestigung am Dreipunkt-Hubsystem(2) der landwirtschaftlichen Zugmaschine (1) ausgestattet sind, und aus einem sogenannten angekuppelten Gestell (40; 100) bestehen, das mit Befestigungsorganen (46, 48; 106, 107, 114) zur Befestigung am landwirtschaftlichen Gerät (3) ausgestattet ist,
- wobei das Kupplungsgestell und das angekuppelte Gestell jeweils zwei Elemente (11, 53, 54; 93, 118, 119) umfassen, die als Auflageplatten bezeichnet werden und auf Höhe der Basis dieser Gestelle angeordnet sind, so dass einerseits die Auflageplatten (11, 53, 54; 93, 118, 119) jedes Gestells (10, 40; 80, 100) voneinander beabstandet und entlang einer Querachse (y) ausgerichtet sind, und andererseits jede Auflageplatte (11; 93) des Kupplungsgestells (10; 80) mit einer der Auflageplatten (53, 54; 118, 119) des angekuppelten Gestells (40; 100) ein Paar Auflageplatten (11/53, 11/54; 93/118, 93/119) bildet, die mit ebenen Kontaktflächen (11a, 53a; 93a, 118a) ausgestattet sind, die so ausgebildet sind, dass die Kontaktfläche (53a; 118a) der Auflageplatte (53, 54; 118, 119) des angekuppelten Gestells (40; 100) in der gepaarten Stellung der Gestelle auf der Kontaktfläche (11a; 93a) der Auflageplatte (11; 93) des Kupplungsgestells (10; 80) aufliegt,
▪ wobei in einer der Auflageplatten (53, 54; 118; 119) jedes Paars von Auflageplatten ((11/53, 11/54; 93/118, 93/119) eine Öffnung (55; 120) mit vorbestimmtem Querschnitt und vorbestimmten Abmessungen ausgebildet ist,
▪ und die andere Auflageplatte (11; 93) jedes Paars von Auflageplatten (11/53, 11/54; 93/118, 93/119) ein von ihrer Kontaktfläche (11a; 93a) vorstehendes Zentrierorgan (18, 19; 94, 95) mit einem Querschnitt umfasst, der sich entlang wenigstens zweier, senkrecht zur Kontaktfläche und jeweils parallel zu den Achsen (x) und (y) verlaufender Ebenen, ausgehend von einem Grundquerschnitt mit Abmessungen, die der Öffnung (55; 120) der anderen Auflageplatte (53, 54; 118, 119) entsprechen, verringert,
- wobei das Kupplungsgestell und das angekuppelte Gestell Mittel zur relativen Verriegelung (22, 23, 52; 70, 71, 52; 87, 109, 110) in ihrer gepaarten Position umfassen,
wobei die Kupplungsvorrichtung **dadurch gekennzeichnet ist, dass** die Auflageplatten so angeordnet sind, dass sie einander so gegenüberliegen, dass jedes der beiden Zentrierorgane (18, 19; 94, 95):
- beim durch Betätigen des Dreipunkt-Hubsystems (2) erzeugten Anheben des Kupplungsgestells (10; 80) teilweise in die gegenüberliegende Öffnung (55 ; 120) eingreift,
• erlaubt, dass Mittel (9; 70, 71, 75) zur Relativverschwenkung der beiden Gestelle (10; 40, 80, 100) in der Position des teilweisen Eingriffs der beiden Zentrierorgane in die gegenüberliegenden Öffnungen (55 ; 120) eine Verschwenkung erzeugen, bei der die beiden Zentrierorgane (18, 19 ; 94, 95) den Drehpunkt der Verschwenkung bilden, bis die gepaarte Endstellung erreicht ist.

5. Kupplungsvorrichtung nach Anspruch 4, **dadurch gekennzeichnet, dass** die Mittel zur Relativverschwenkung aus einem Zylinder (9) bestehen, der so angeordnet ist, dass er den zentralen Arm des Hubsystems (2) bildet.

6. Kupplungsvorrichtung nach Anspruch 5, **dadurch gekennzeichnet, dass** die Verriegelungsmittel umfassen:
- mindestens einen Verriegelungsarm (22), der an das Kupplungsgestell (10) angelenkt und mit einem Ende (23) in Form eines Hakens zum Greifen eines Rastorgans (52), das fest mit dem angekuppelten Gestell (40) verbunden ist, in der gepaarten Position der beiden Gestelle (10, 40) versehen ist,
- Betätigungsmittel (35) für jeden Verriegelungsarm (22), die dazu geeignet sind, diesen zwischen einer Entriegelungsstellung und einer Verriegelungsstellung zum Blockieren des gegenüberliegenden Rastorgans (52) zu verschwenken.

7. Kupplungsvorrichtung nach Anspruch 5 **dadurch gekennzeichnet, dass** die Verriegelungsmittel einen Zylinder (87) umfassen, der vom Kupplungsgestell (80) so getragen wird, dass er sich entlang einer Querachse senkrecht zur Achse (x) erstreckt, die mit einer Stange (87a) versehen ist, die einen Riegel zum Zusammenwirken mit einem Anschlag (109, 110), der an dem angekuppelten Gestell (100) montiert ist, in der gepaarten Position der beiden Gestelle (80, 100) bildet.

8. Kupplungsvorrichtung nach Anspruch 4, **dadurch gekennzeichnet, dass** die Mittel zur Relativverschwenkung umfassen:
- mindestens einen Schwenkarm (70, 71), der an das Kupplungsgestell (10) um eine Gelenkachse zumindest im Wesentlichen parallel zur auf Höhe der Basis des Kupplungsgestells angeordneten Achse (y) angelenkt ist, wobei jeder der Schwenkarme ein Ende (73, 74) in Form eines Hakens zum Greifen eines Rastorgans (52) umfasst, das fest mit dem angekuppelten Gestell (40) verbunden ist, in der Position des teilweisen Eingriffs der beiden Zentrierorgane (18, 19) in die gegenüberliegenden Öffnungen (55),
- Betätigungsmittel (75) für jeden Schwenkarm (70, 71), die dazu eingerichtet sind, diesen so zu verschwenken, dass dessen hakenförmiges Ende (73, 74) einer Bahn folgt, in deren Verlauf es das Greifen des gegenüberliegenden Rastorgans (52) sicherstellt und anschließend das Verschwenken des Kupplungsgestells (10) bewirkt, bis die verbundene Stellung der beiden Gestelle (10, 40) erreicht ist.

9. Kupplungsvorrichtung nach Anspruch 8, **dadurch gekennzeichnet, dass** das hakenförmige Ende (73, 74) jedes Schwenkarms (70, 71) und jedes zugeordnete Rastorgan (52) komplementäre Formen aufweisen, die zum Sicherstellen der Verriegelung der beiden Gestelle (10, 40) in ihrer gepaarten Stellung eingerichtet sind.

10. Kupplungsvorrichtung nach einem der Ansprüche 8 oder 9, **dadurch gekennzeichnet, dass** sie einen Zylinder (9) umfasst, der so angeordnet ist, dass er den zentralen Arm des Hubsystems (2) bildet.

11. Kupplungsvorrichtung nach einem der Ansprüche 4 bis 10, **dadurch gekennzeichnet, dass** jede Öffnung (55; 120), die in einer Auflageplatte (53, 54; 118, 119) ausgebildet ist, eine Ausfräsung (56) auf Höhe ihrer Verbindung mit der Kontaktfläche (53a; 118a) der Auflageplatte aufweist.

12. Kupplungsvorrichtung nach Anspruch 11, **dadurch gekennzeichnet, dass**:
- jede Öffnung (55; 120), die in einer Auflageplatte (53, 54; 118, 119) ausgebildet ist, in der Verlängerung der Ausfräsung (56) aus einer Öffnung mit konstantem Querschnitt besteht,
- jedes der beiden Zentrierorgane (18, 19; 94, 95), ausgehend von der Kontaktfläche (11a; 93a) der Auflageplatte (11; 93), eine Basis (20; 96) mit konstantem Querschnitt, der dem der gegenüberliegenden Öffnung (55; 120) entspricht, umfasst.

13. Kupplungsvorrichtung nach Anspruch 12, **dadurch gekennzeichnet, dass** jedes der beiden Zentrierorgane (18, 19; 94, 95) eine zylindrische Basis (20; 96) aufweist, die um einen konischen oder halbkugelförmigen Abschnitt (21; 97) verlängert ist, wobei jede in einer Auflageplatte (53, 54; 18, 119) ausgebildete Öffnung (55; 120) einen kreisförmigen Querschnitt mit einem Durchmesser aufweist, der dem der Basis (20; 96) der beiden Zentrierorgane (18, 19; 94, 95) entspricht.

14. Kupplungsvorrichtung nach einem der Ansprüche 4 bis 13, **dadurch gekennzeichnet, dass** das Kupplungsgestell (10; 80) und das angekuppelte Gestell (40; 100) vordere Flächen (10a, 49a; 80a, 100a) zum Kontakt der Gestelle in ihrer verbundenen Endstellung umfassen.

## Claims

1. Method for hitching an agricultural implement (3) to a three-point lifting system (2) of an agricultural tractor (1) of longitudinal axis (x), wherein:
a hitching device is provided, comprising:
- two frames (10, 40; 80; 100), configured such as to extend transversely in relation respectively to the agricultural tractor (1) and the agricultural implement, and such as to be matched, and consisting of a frame referred to as the hitching frame (10; 80), provided with elements (16, 17a; 92) for fixing to the three-point lifting system (2) of the agricultural tractor (1), and a frame referred to as the hitched frame (40; 100), provided with elements (46, 48; 106, 107, 114) for fixing to the agricultural implement (3), the said hitching frame and hitched frame each comprising two elements (11, 52, 54; 93,118, 119), referred to as footings, arranged in the region of the base of these frames in such a way that, on the one hand, the footings (11, 53, 54; 93, 118, 119) of each frame (10, 40; 80, 100) are at a distance from one another and aligned in accordance with a transverse axis (y), and, on the other, that each footing (11; 93) of the hitching frame (10; 80) forms, with one of the footings (53, 54; 118, 119) of the hitched frame (40; 100), a pair of footings (11/53, 11/54; 93/118, 93/119) provided with flat contact faces (11a, 53a; 93a, 118a) configured such that the contact face (53a; 118a) of the footing (53, 54; 118, 119) of the hitched frame (40; 100) rests on the contact face (11 a; 93a) of the footing (11; 93) of the hitching frame (10; 80) in the matched position of the said footings:
one of the footings (53 54; 118; 119) of each pair of footings (11/53, 11/54; 93/118, 93/119) being pierced by an orifice (55; 120) of pre-defined cross-section and dimensions;
and the other footing (11; 93) of each pair of footings (11/53, 11/54; 93/118, 93/119) comprising, projecting on the contact face (11 a; 93a), a centring member (18, 19; 94, 95) of which the cross-section decreases, following at least two planes perpendicular to the said contact face and respectively parallel to the (x) and (y) axes, from a basic cross-section of a section having dimensions matching those of the orifice (55; 120) of other footing (53, 54; 118,119);
- tilting means (9; 70, 71, 75) configured such as to cause, in an at least partial engagement position of the two centring members (18, 19; 94, 95) in the opposing orifices (55; 120), a relative tilting of the two frames (10, 40; 80, 100), during which the two centring members form the pivot of the tilting;
and that the hitching is carried out in an initial pre-positioning position of the agricultural tractor (1) relative to the agricultural implement (3);
(a) initially actuating the lifting system (2) in such a way as to cause each of the two centring members (18, 19) to engage partially in the opposing orifice (55, 120) by the lifting of the hitching frame again,
(b) and then causing the relative tilting of the two frames (10, 40) in such a way as to cause, in the position of partial engagement of the said centring members (18, 19; 94, 95) in the opposing orifices (55; 120), a tilting, during which the said two centring members form the pivot of the said tilting, until a final matched position is obtained in which the contact faces (11 a, 53a; 93a; 118a) of the footings (11, 53, 54; 93, 118, 119) of each of the two pairs of footings (11/53, 11/54; 93/118, 93/119) are superimposed in contact on one another, and the said two centring members (18, 19; 94, 95) are entirely engaged in the opposing orifices (55; 120),
(c) and ensuring a relative locking of the two frames (10, 40).

2. Method of hitching according to claim 1, **characterised in that** the lifting system (2) comprises a central arm (9) consisting of a cylinder, and (b) **in that** the relative tilting of the two frames (10, 40; 80, 100) is caused by controlling the deployment of the said cylinder.

3. Method of hitching according to claim 1, **characterised in that**:
the hitching frame (10) comprises at least one tilting arm (70, 71) pivoting on the said hitching frame (10) around an axis of articulation at least approximately parallel to the (y) axis, positioned in the region of the base of the said hitching frame (73, 74) in the form of a gripping hook in the partial engagement position of the said centring members (18, 19) in the opposing orifices (55) of a hooking element (52) formed as one piece with the hitched frame (40),
(b) the relative tilting of the two frames causes each tilting arm (70, 71) to pivot in such a way that its end, in the form of a hook (73, 74) travels along a trajectory, in the course of which it ensures the gripping of the hooking element (52) opposite, then causes the tilting of the hitching frame (10).

4. Device for hitching an agricultural implement (3) to a three-point lifting system (2) of an agricultural tractor (1) of longitudinal axis (x), comprising a hitching device comprising two frames (10, 40; 80; 100), configured such as to extend transversely in relation respectively to the agricultural tractor (1) and the agricultural implement (3), and such as to be matched, and consisting of a frame referred to as the hitching frame (10; 80), provided with elements (16, 17a; 92) for fixing to the three-point lifting system (2) of the agricultural tractor (1), and a frame referred to as the hitched frame (40; 100) provided with elements (46, 48; 106, 107, 114) for fixing to the agricultural implement (3):
- the said hitching frame and said hitched frame each comprising two elements (11, 53, 54; 93, 118, 119), referred to as footings, arranged in the region of the base of these frames in such a way that, on the one hand, the footings (11, 53, 54; 93, 118, 119) of each frame (10, 40; 80, 100) are at a distance from one another and aligned in accordance with a transverse axis (y), and, on the other, that each footing (11; 93) of the hitching frame (10; 80) forms, with one of the footings (53, 54; 118, 119) of the hitched frame (40; 100), a pair of footings (11/53, 11/54; 93/118, 93/119) provided with flat contact faces (11 a, 53a; 93a, 118a) configured such that the contact face (53a; 118a) of the footing (53, 54; 118, 119) of the hitched frame (40; 100) rests on the contact face (11 a; 93a) of the footing (11; 93) of the hitching frame (10; 80) in the matched position of the said footings:
one of the footings (53 54; 118; 119) of each pair of footings (11/53, 11/54; 93/118, 93/119) being pierced by an orifice (55; 120) of pre-defined cross-section and dimensions;
and the other footing (11; 93) of each pair of footings (11/53, 11/54; 93/118, 93/119) comprising, projecting on the contact face (11 a; 93a), a centring member (18, 19; 94, 95) of which the cross-section decreases, following at least two planes perpendicular to the said contact face and respectively parallel to the (x) and (y) axes, from a basic cross-section of a section having dimensions matching those of the orifice (55; 120) of other footing (53, 54; 118,119);
- the said hitching device and the hitched device comprising relative locking means (22, 23, 52; 70, 71, 52; 87, 109, 110) in their matched position,
the said hitching device being **characterised in that** the said footings are moved in order to come opposite one another in such a way that each of the centring members (18, 19; 94, 95):
- engages partially in the opposing orifice (55; 120) when the hitching frame (10; 80) is lifted again, caused by the action of the three-point lifting system (2),
- allows, at the relative tilting means (9; 70, 71, 75) of the two frames (10, 40; 80, 100), in the said partial engagement position of the two centring members in the opposing orifices (55; 120), for tilting to be caused, during which the said two centring members (18, 19; 94, 95) constitute the pivot of the said tilting, until the final matched position is obtained.

5. Hitching device according to claim 4, **characterised in that** the relative tilting means consist of a cylinder (9) arranged in such a way as to constitute the central arm of the lifting system (2).

6. Hitching device according to claim 5, **characterised in that** the locking means comprise:
at least one locking arm (22), articulated on the hitching frame (10), comprising one end (23) in the form of a gripping hook, in the matched position of the two frames (10, 40), of a hooking element (52) formed as one piece with the hitched frame (40),
actuating means (35) of each locking arm (22) arranged such as to pivot between an unlocked position and a locked position for blocking the opposite hooking element (52).

7. Hitching device according to claim 5, **characterised in that** the locking means comprise a cylinder (87), carried by the hitching frame (80) in such a way as to extend along a transverse axis orthogonal to the axis (x), comprising a rod (87a) forming a bolt, configured such as to interact with a keeper element (109, 110) mounted on the hitched frame (100) in the matched position of the two frames (80, 100).

8. Hitching device according to claim 4, **characterised in that** the tilting means comprise:
at least one tilting arm (70, 71) pivoting on the said hitching frame (10) around an axis of articulation at least approximately parallel to the (y) axis, positioned in the region of the base of the said hitching frame (73, 74) in the form of a gripping hook in the partial engagement position of the said centring members (18, 19) in the opposing orifices (55) of a hooking element (52) formed as one piece with the hitched frame (40),
actuating means (75) of each tilting arm (70, 71) configured such as to cause the arm to pivot in such a way that its end in the form of a hook (73, 74) travels along a trajectory, in the course of which it ensures the gripping of the hooking element (52) opposite, then causes the tilting of the hitching frame (10) until the conjoined position of the two frames (10, 40) is obtained.

9. Hitching device according to claim 8, **characterised in that** the end in the form of a hook (73, 74) of each tilting arm (70, 71) and each associated hooking element (52) present complementary configurations such as to ensure the locking of the two frames (10, 40) in their matched position.

10. Hitching device according to any one of claims 8 or 9, **characterised in that** it comprises a cylinder (9), arranged in such a way as to comprise the central arm of the lifting system (2).

11. Hitching device according to any one of claims 4 to 10, **characterised in that** each orifice (55; 120) arranged in a footing (53, 54; 118, 119) comprises a countersink (56) in the region of its junction with the contact face (53a; 118a) of the said footing.

12. Hitching device according to claim 11, **characterised in that**:
each orifice (55; 120) arranged in a footing (53, 54; 118, 119) consists, in the extension of the countersink (56), an orifice of constant straight cross-section;
each of the said two centring members (18, 19; 94, 95) comprises, starting from the contact face (11 a; 93a) of the footing (11; 93), a base (20; 96) of constant straight cross-section, conjugated with that of the opposite orifice (55; 120).

13. Hitching device according to claim 12, **characterised in that** each of the said two centring members (18, 19; 94, 95) comprises a cylindrical base (20; 96), extended by a section (21; 97) of conical or hemispheric shape, each orifice (55; 120) arranged in a footing (53, 54; 118, 119) presenting a circular cross-section of a diameter conjugate with that of the base (20; 96) of the said two centring members (18, 19; 94, 95).

14. Hitching device according to any one of claims 4 to 13, **characterised in that** the hitching frame (10; 80) and the hitched frame (40; 100) comprise front faces (10a, 49a; 80a; 100a) for contact of the said frames in their final conjoined position.
